# EUROPEAN PATENT APPLICATION

(11) **EP 4 783 505 A1**
(43) Date of publication of application: **29.07.2026**
(21) Application number: 23952596.7
(22) Date of filing: 20.09.2023
(51) Int. Cl.: H04L 5/00

(54) **CHANNEL STATE INFORMATION ACQUISITION METHOD AND APPARATUS, DEVICE, AND MEDIUM**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: RGTH
(86) International application number: PCT/CN2023/120160
(87) International publication number: WO 2025/059936

(57) **Abstract**

The present application discloses a channel state information (CSI) acquisition method and apparatus, a device, and a medium, and belongs to the field of communications. The method is executed by a network device, and the method comprises: on the basis of first CSI and auxiliary information, determining second CSI, the first CSI being CSI between the network device and a first terminal device, the second CSI being CSI between the network device and a second terminal device, and the auxiliary information comprising information corresponding to the terminal device and used to determine the second CSI. The method supports determining the second CSI by means of the first CSI and the auxiliary information, effectively reducing power consumption and resource overhead required by a communication device to measure a reference signal or feed back CSI.

## Description

### TECHNICAL FIELD

The present disclosure relates to the field of communications, and in particular, to a channel state information acquisition method, a channel state information acquisition apparatus, a device, and a medium.

### BACKGROUND

Communication devices periodically measure reference signals to acquire channel state information (CSI), or periodically feeds back CSI, which consumes a large amount of air interface resource overhead and results in high power consumption of the communication devices, which is not conducive to resource utilization efficiency.

How to reduce the power consumption required for communication devices to acquire CSI is a problem that needs to be solved.

### SUMMARY

The present disclosure provides a channel state information acquisition method, a channel state information acquisition apparatus, a device, and a medium, the technical solutions include at least the following content.

According to an aspect of the embodiments of the present disclosure, a channel state information acquisition method is provided, the method is performed by a network device, and the method includes:
determining second CSI based on first CSI and auxiliary information.

The first CSI is CSI between the network device and a first terminal device, the second CSI is CSI between the network device and a second terminal device, and the auxiliary information includes information corresponding to a terminal device for determining the second CSI.

According to another aspect of the embodiments of the present disclosure, a channel state information acquisition method is provided, the method is performed by a first terminal device, and the method includes:
transmitting first CSI to a network device; and
transmitting first auxiliary information or a first signal to the network device.

The first CSI is CSI between the network device and the first terminal device, the first signal is used to determine the first auxiliary information, the first auxiliary information includes information corresponding to the first terminal device for determining second CSI, and the second CSI is CSI between the network device and a second terminal device.

According to another aspect of the embodiments of the present disclosure, a channel state information acquisition method is provided, the method is performed by a second terminal device, and the method includes:
transmitting second auxiliary information or a first signal to a network device.

The first signal is used to determine the second auxiliary information, the second auxiliary information includes information corresponding to the second terminal device for determining second CSI, and the second CSI is CSI between the network device and the second terminal device.

According to another aspect of the embodiments of the present disclosure, a channel state information acquisition apparatus is provided, and the apparatus includes:
a processing module configured to determine second CSI based on first CSI and auxiliary information.

The first CSI is CSI between the apparatus and a first terminal device, the second CSI is CSI between the apparatus and a second terminal device, and the auxiliary information includes information corresponding to a terminal device for determining the second CSI.

According to another aspect of the embodiments of the present disclosure, a channel state information acquisition apparatus is provided, and the apparatus includes:
a transmitting module configured to transmit first CSI to a network device.

The transmitting module is further configured to transmit first auxiliary information or a first signal to the network device.

The first CSI is CSI between the network device and the apparatus, the first signal is used to determine the first auxiliary information, the first auxiliary information includes information corresponding to the apparatus for determining second CSI, and the second CSI is CSI between the network device and a second terminal device.

According to another aspect of the embodiments of the present disclosure, a channel state information acquisition apparatus is provided, and the apparatus includes:
a transmitting module configured to transmit second auxiliary information or a first signal to a network device.

The first signal is used to determine the second auxiliary information, the second auxiliary information includes information corresponding to the apparatus for determining second CSI, and the second CSI is CSI between the network device and the apparatus.

According to an aspect of the embodiments of the present disclosure, a communication device is provided, and the communication device includes:
a processor;
a receiver and/or a transmitter connected to the processor; and
a memory configured to store executable an instruction executable by the processor.

The communication device is configured to implement the channel state information acquisition methods as described above.

According to an aspect of the present disclosure, a computer-readable storage medium is provided. The computer-readable storage medium has stored executable instructions, and the executable instructions are loaded and executed by a processor to implement the channel state information acquisition methods as described in the above aspects.

According to an aspect of the present disclosure, a computer program product is provided. The computer program product includes computer instructions, the computer instructions stored in a computer-readable storage medium, a processor of a computer device reads the computer instructions from the computer-readable storage medium, the processor executes the computer instructions to cause the computer device to perform the channel state information acquisition methods as described in the above aspects.

According to an aspect of the present disclosure, a chip is provided. The chip includes a programmable logic circuit and/or program instructions. The chip, when running, is configured to implement the channel state information acquisition methods as described in the above aspects.

According to an aspect of the present disclosure, a computer program is provided. The computer program includes computer instructions, and a processor of a computer device executes the computer instructions to cause the computer device to perform the channel state information acquisition methods as described in the above aspects.

The technical solutions provided in the embodiments of the present disclosure may include the following beneficial effects.

Determining the second CSI using the first CSI and the auxiliary information is supported. Since the acquisition of the second CSI does not depend on reference signal measurement or CSI feedback between the network device and the second UE, the total amount of CSI feedback and the total amount of reference signal transmission between the network device and the UE are reduced, which effectively reduces the power consumption and resource overhead required for the reference signal measurement or CSI feedback of the communication device.

### BRIEF DESCRIPTION OF THE DRAWINGS

In order to describe technical solutions in embodiments of the present disclosure more clearly, the accompanying drawings to be used in the descriptions of the embodiments will be introduced briefly. However, the accompanying drawings to be described below are merely some embodiments of the present disclosure, and a person of ordinary skill in the art can obtain other drawings according to those drawings without creative effort.
FIG. 1 shows a schematic diagram of a wireless communication system provided in an exemplary embodiment of the present disclosure;
FIG. 2 shows a schematic flowchart of a channel state information acquisition method provided in an exemplary embodiment of the present disclosure;
FIG. 3 shows a schematic flowchart of a channel state information acquisition method provided in an exemplary embodiment of the present disclosure;
FIG. 4 shows a schematic flowchart of a channel state information acquisition method provided in an exemplary embodiment of the present disclosure;
FIG. 5 shows a schematic diagram of an auxiliary information acquisition provided in an exemplary embodiment of the present disclosure;
FIG. 6 shows a schematic diagram of a channel state information acquisition method provided in an exemplary embodiment of the present disclosure;
FIG. 7 shows a schematic flowchart of a channel state information acquisition method provided in an exemplary embodiment of the present disclosure;
FIG. 8 shows a schematic flowchart of a channel state information acquisition method provided in an exemplary embodiment of the present disclosure;
FIG. 9 shows a schematic flowchart of a channel state information acquisition method provided in an exemplary embodiment of the present disclosure;
FIG. 10 shows a schematic flowchart of a channel state information acquisition method provided in an exemplary embodiment of the present disclosure;
FIG. 11 shows a structural block diagram of a channel state information acquisition apparatus provided in an exemplary embodiment of the present disclosure;
FIG. 12 shows a structural block diagram of a channel state information acquisition apparatus provided in an exemplary embodiment of the present disclosure;
FIG. 13 shows a structural block diagram of a channel state information acquisition apparatus provided in an exemplary embodiment of the present disclosure; and
FIG. 14 shows a structural schematic diagram of a communication device provided in an exemplary embodiment of the present disclosure.

### DETAILED DESCRIPTION

In order to make objectives, technical solutions, and advantages of the present disclosure clearer, the embodiments of the present disclosure will be further described in detail below with reference to the accompanying drawings. Exemplary embodiments will be described in detail, examples of which are illustrated in the accompanying drawings. When the following description refers to the accompanying drawings, unless otherwise specified, the same reference numbers in different drawings represent the same or similar elements. The implementations described in the following exemplary embodiments do not represent all embodiments consistent with the present disclosure, and they are merely examples of apparatuses and methods consistent with some aspects of the present disclosure as detailed in the appended claims.

The terms used in the present disclosure are for the purpose of describing particular embodiments only and are not intended to be limiting of the present disclosure. The singular forms "a", "said", and "the" used in the present disclosure and the appended claims are also intended to include the plural forms, unless the context clearly indicates otherwise. It should also be understood that the term "and/or" as used herein refers to and includes any or all possible combinations of one or more associated listed items.

It should be understood that although the terms such as "first", "second", "third", etc. may be used in the present disclosure to describe various information, such information should not be limited to these terms. These terms are only used to distinguish information of the same type from one another. For example, without departing from the scope of the present disclosure, first information may also be referred to as second information, and similarly, the second information may also be referred to as the first information. Depending on the context, the word "if" as used here can be interpreted as "in a case where", "when", or "in response to determining that".

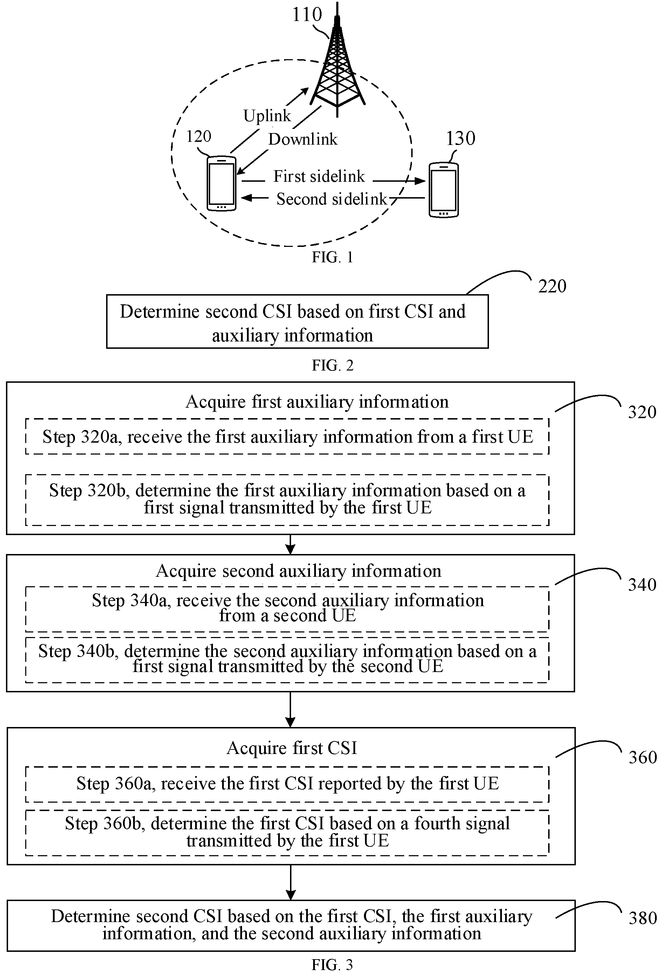

FIG. 1 shows a schematic diagram of a wireless communication system provided in an exemplary embodiment of the present disclosure. The wireless communication system includes a network device 110 and a terminal device 120, and/or a terminal device 120 and a terminal device 130, which will not be limited in the present disclosure.

The network device 110 in the present disclosure provides wireless communication functionality. The network device 110 includes, but is not limited to: an evolved Node B (eNB), a radio network controller (RNC), a Node B (NB), a base station controller (BSC), a base transceiver station (BTS), a home evolved Node B or home Node B (HNB), a baseband unit (BBU), an access point (AP) in a wireless fidelity (Wi-Fi) system, a wireless relay node, a wireless backhaul node, a transmission point (TP) or a transmission and reception point (TRP), etc; it may also be a next generation Node B (gNB) or a transmission point (TRP or TP) in a 5th generation (5G) mobile communication system, or an antenna panel or a group of antenna panels (including multiple antenna panels) of a base station in a 5G system; or it may also be a network node constituting a gNB or transmission point, such as a baseband unit (BBU) or distributed unit (DU), or a base station in a beyond fifth generation (B5G) mobile communication system or a 6th generation (6G) mobile communication system, or a core network (CN), a fronthaul, a backhaul, a radio access network (RAN), a network slice, or a reader/writer of a radio frequency identification (RFID) system.

The terminal device 120 and/or the terminal device 130 in the present disclosure are also referred to as user equipments (UEs), access terminals, user units, user stations, mobile stations, mobile consoles, remote stations, remote terminals, mobile devices, user terminals, terminals, wireless communication devices, user agents, or user devices. This terminals include, but are not limited to: handheld devices, wearable devices, in-vehicle devices, and IoT devices, etc., for example, electronic tags, controllers, mobile phones, tablet computers, e-readers, laptop computers, desktop computers, televisions, game consoles, mobile Internet devices (MID), augmented reality (AR) terminals, virtual reality (VR) terminals, mixed reality (MR) terminals, wearable devices, handles, wireless terminals in industrial control, wireless terminals in self-driving, wireless terminals in remote medical, wireless terminals in smart grid, wireless terminals in transportation safety, wireless terminals in smart city, wireless terminals in smart home, wireless terminals in remote medical surgery, cellular phones, cordless phones, session initiation protocol (SIP) phones, wireless local loop (WLL) stations, personal digital assistants (PDAs), set top boxes (STBs), customer premises equipment (CPEs), etc.

The network device 110 and the terminal device 120 communicate with each other through an air interface technology, such as the Uu interface.

For example, the network device 110 and the terminal device 120 have two communication scenarios: an uplink communication scenario and a downlink communication scenario. The uplink communication refers to transmitting signals to the network device 110, and the downlink communication refers to transmitting signals to the terminal device 120.

The terminal device 120 and the terminal device 130 communicate with each other through a direct communication interface, such as the PC5 interface.

In some embodiments, the terminal device 120 and the terminal device 130 have two communication scenarios: a first sidelink communication scenario and a second sidelink communication scenario. The first sidelink communication refers to transmitting signals to the terminal device 130, and the second sidelink communication refers to transmitting signals to the terminal device 120.

The terminal device 120 and the terminal device 130 are both within a network coverage and located in the same cell; alternatively, the terminal device 120 and the terminal device 130 are both within the network coverage but located in different cells; alternatively, the terminal device 120 is within the network coverage but the terminal device 130 is outside the network coverage.

The technical solutions provided in the embodiments of the present disclosure may be applied to various communication systems, such as a global system for mobile communication (GSM) system, a code division multiple access (CDMA) system, a wideband code division multiple access (WCDMA) system, a general packet radio service (GPRS), a long term evolution (LTE) system, a LTE frequency division duplex (FDD) system, a LTE time division duplex (TDD) system, an advanced long term evolution (LTE-A) system, a universal mobile telecommunication saystem (UMTS), a worldwide interoperability for microwave access (WiMAX) communication system, a 5G mobile communication system, a new radio (NR) system, an evolution of NR system, a LTE-based access to unlicensed spectrum (LTE-U) system, an NR-based access to unlicensed spectrum (NR-U) system, a terrestrial networks (TN) system, a non-terrestrial networks (NTN) system, wireless local area networks (WLAN), wireless Fidelity (Wi-Fi), a cellular IoT system, a cellular passive IoT system, an ambient power enabled Internet of Things (Ambient IoT/A-IoT) system, and a zero-power IoT system; or may also be applied to subsequent evolution systems of 5G NR systems, as well as B5G, 6G and subsequent evolution systems. In some embodiments of the present disclosure, "NR" may also be referred to as a 5G NR system or a 5G system. 5G mobile communication systems may include non-standalone (NSA) networks and/or standalone (SA) networks.

The technical solutions provided in the embodiments of the present disclosure may also be applied to machine-type communication (MTC), long term evolution-machine (LTE-M) communication, device-to-device (D2D) networks, machine-to-machine (M2M) networks, Internet of Things (IoT) networks, or other networks. The IoT networks may include, for example, vehicle-to-everything (V2X) networks. In the context of vehicle-to-everything (V2X) systems, the communication methods are collectively referred to as vehicle to X (V2X, where X can represent everything). For example, the V2X may include vehicle to vehicle (V2V) communication, vehicle to infrastructure (V2I) communication, vehicle to pedestrian (V2P) communication, or vehicle to network (V2N) communication.

The wireless communication system provided in this embodiment may be applied to, but is not limited to, at least one of the following communication scenarios: uplink communication scenarios, downlink communication scenarios, or side-link communication scenarios.

In the communication system shown in FIG. 1, to improve communication quality and ensure system communication efficiency, accurate channel quality or channel state changes need to be acquired.

Considering the downlink channel between the network device 110 and the terminal device 120 as an example, the terminal device 120 feeds back downlink channel quality to the network device 110 through channel state information (CSI), so that when performing downlink transmission, the network device 110 uses appropriate signal transmission parameters, such as modulation and coding scheme (MCS) parameters, precoding scheme, time-domain resources, frequency-domain resources, etc., so as to improve downlink transmission quality, e.g. to reduce a block error rate (BLER) of the downlink transmission.

The CSI may include at least one of: a channel quality indicator (CQI), a precoding matrix indicator (PMI), a CSI reference signal resource indicator (CSI-RS resource indicator (CRI)), a synchronization signal/physical broadcast channel (SS/PBCH) block resource indicator (SSBRI), a layer indicator (LI), a rank indicator (RI), or Layer 1 reference signal received power (L1-RSRP).

For example, the terminal device 120 acquires CSI by measuring downlink CSI-RS(s) and reports the CSI to the network device 110. The CSI-RS may be configured to be transmited periodically, semi-statically, or non-periodically.

Considering the uplink channel between the terminal device 120 and the network device 110 as an example, the network device 110 acquires uplink channel quality by measuring uplink reference signal(s) transmitted by the terminal device 120, so that when scheduling the terminal device 120 to perform uplink transmission, the network device 110 uses appropriate signal transmission parameters, such as MCS parameters, precoding scheme, time-domain resources, frequency-domain resources, etc., to improve uplink transmission quality, e.g., to reduce a BLER of uplink transmission.

In a time division duplex (TDD) mode, the network device 110 may acquire the uplink channel quality through the uplink reference signal(s) and acquire the downlink channel quality using channel reciprocity.

As for the channel quality estimation method in a sidelink communication scenario, reference can be made to that in the uplink communication scenario and the downlink communication scenario. Considering the sidelink channel between the terminal device 120 and the terminal device 130 as an example, the terminal device 120 may feed back first sidelink channel quality to the terminal device 130 through channel state information (CSI), or may acquire second sidelink channel quality by measuring reference signal(s) from the terminal device 130.

However, complete or periodic CSI feedback consumes a large amount of air interface resource overhead and causes high power consumption of the communication device, which is not conducive to resource utilization efficiency. If the overhead is reduced using a vector quantization (VQ) method or a codebook-based method, the channel information will be lost to some extent. Furthermore, the feedback generated by the VQ method or the codebook-based method will increase exponentially with the number of transmit antennas.

In view of the above problems, the present disclosure provides a channel state information acquisition method, an apparatus, a device and a medium, thereby reducing the power consumption required for the communication device to acquire the channel state information and improving the efficiency of channel state information acquisition.

In the embodiments of the present disclosure, the CSI feedback is also referred to as CSI back transmission or CSI reporting.

In the embodiments of the present disclosure, the "agreement" may be implemented by pre-storing corresponding codes, tables or other manners that are capable of indicating relevant information in the communication devices (e.g., the terminal device and the network device). The present disclosure does not limit the specific implementation manner. The communication protocol agreement may also be understood as being pre-defined by the communication protocol.

FIG. 2 shows a schematic flowchart of a channel state information acquisition method provided in an exemplary embodiment of the present disclosure. The method is performed by the network device shown in FIG. 1. The method includes:
step 220 in which second CSI is determined based on first CSI and auxiliary information.

The first CSI is CSI between a network device and a first UE, and the second CSI is CSI between the network device and a second UE.

In some embodiments, the first CSI is CSI of a downlink channel between the network device and the first UE. In other words, the first CSI may reflect channel quality or channel state changes of the downlink channel from the network device to the first UE. The second CSI is CSI of a downlink channel between the network device and the second UE. In other words, the second CSI may reflect channel quality or channel state changes of the downlink channel from the network device to the second UE.

In some embodiments, the first CSI is CSI of an uplink channel between the network device and the first UE. In other words, the first CSI may reflect channel quality or channel state changes of the uplink channel from the first UE to the network device. The second CSI is CSI of an uplink channel between the network device and the second UE. In other words, the second CSI may reflect channel quality or channel state changes of the uplink channel from the second UE to the network device.

In some embodiments, the first CSI is the CSI of the downlink channel between the network device and the first UE, and the second CSI is the CSI of the uplink channel between the network device and the second UE.

In some embodiments, the first CSI is the CSI of the uplink channel between the network device and the first UE, and the second CSI is the CSI of the downlink channel between the network device and the second UE.

The auxiliary information includes information corresponding to UE(s) for determining the second CSI. It can also be understood that the auxiliary information includes information of the UE(s) related to determining the second CSI. Optionally, the UE(s) include the first UE and/or the second UE. Optionally, the UE(s) include part or all of UEs located within a signal coverage of the network device. Optionally, the UE(s) include part or all of UEs for which the network device serves as a serving cell.

In some embodiments, the CSI includes at least one of: a CQI, a PMI, a CRI, an SSBRI, a layer indicator, a rank indicator, or L1-RSRP.

In summary, the method provided in the embodiments of the present disclosure supports determining the second CSI using the first CSI and the auxiliary information. Since the acquisition of the second CSI does not depend on reference signal measurement or CSI feedback between the network device and the second UE, the total amount of CSI feedback and the total amount of reference signal transmission between the network device and the UE(s) are reduced, which effectively reduces the power consumption and resource overhead required for the reference signal measurement or CSI feedback of the communication device. Furthermore, it eliminates the need for the vector quantization or codebook-based method to reduce the air interface resources required for CSI feedback, thus avoiding the loss of channel information between the network device and the second UE.

In some embodiments, step 220 may be implemented as step 380. Optionally, in addition to step 380, the channel state information acquisition method may further include one or more of step 320, step 340, or step 360, as shown in FIG. 3. FIG. 3 shows a schematic flowchart of a channel state information acquisition method provided in an exemplary embodiment of the present disclosure. The method is performed by the network device shown in FIG. 1 or FIG. 2. The method includes:
step 320 in which first auxiliary information is acquired.

The first auxiliary information includes information corresponding to the first UE for determining the second CSI.

In some embodiments, the first auxiliary information includes at least one of:
- location information of the first UE;
- orientation information between the first UE and the network device;
- orientation information of the first UE relative to the network device;
- beam information corresponding to the first UE; or
- location correlation between the first UE and a third UE, where the third UE includes a UE other than the first UE.

The location information of the first UE is used to indicate an absolute location and/or a relative location of the first UE.

In some embodiments, the absolute location refers to latitude and longitude location. The absolute location may also be called an absolute geographical location. For example, the location information may indicate the absolute location of the first UE using latitude and longitude or coordinates.

In some embodiments, the relative location refers to a location relative to a reference point, and the reference point may be the second UE, or the network device, or the third UE, or another UE. The relative location is also called a relative geographical location. For example, the location information may indicate the relative location of the first UE by coordinates; alternatively, the location information may indicate the relative location of the first UE by latitude and longitude offset values relative to the reference point. For example, the reference point is the network device. Within a cell range corresponding to the network device, several areas are divided with the network device as the reference point. The relative location of the first UE is indicated by an area number, an area index, or an area identity (ID).

The location information of the first UE carried by the first auxiliary information may help the network device know locations of one or more first UEs. In a case where the location information of the first UE is combined with the first CSI corresponding to the one or more first UEs, the channel states or channel qualities between first UEs at different locations and the network device may be acquired, which helps the network device clarify differences or correlations between all first channels. A first channel is a channel between a first UE and the network device, and the first channel includes a downlink channel and/or an uplink channel.

The distance information between the first UE and the network device is used to indicate a distance between the first UE and the network device.

The orientation information of the first UE relative to the network device is used to indicate an orientation of the first UE relative to the network device. For example, the orientation of the first UE relative to the network device may be represented by east, south, west, north, southeast, southwest, northeast, or northwest. For example, the orientation of the first UE relative to the network device may be represented by latitude and longitude offset values. For example, the orientation of the first UE relative to the network device may be represented by a relative angle. For example, the orientation of the first UE relative to the network device may be represented by coordinates.

The beam information corresponding to the first UE is used to indicate beam used by the first UE when performing uplink transmission and/or downlink transmission. The beam information carried by the first auxiliary information may be used by the network device to acquire the channel states or channel qualities of first UEs in different orientations to the network device, which helps the network device clarify differences or correlations between channels corresponding to all beam directions.

The location correlation between the first UE and the third UE is used to indicate that the first UE and the third UE have a location association.

In some embodiments, the first UE and the third UE have at least one of the following location associations:
- a distance between the third UE and the first UE is less than a first threshold;
- the third UE and the first UE belong to the same area;
- a first distance and a second distance are the same, where the first distance refers to a distance between the first UE and the network device, and the second distance refers to a distance between the third UE and the network device;
- a difference value between the first distance and the second distance is less than a second threshold;
- the third UE and the first UE are in the same orientation relative to the network device; or
- an angle between the orientation of the third UE relative to the network device and the orientation of the first UE relative to the network device is less than a third threshold.

In some embodiments, the location association between the first UE and the third UE is determined based on the first auxiliary information. Alternatively, the location association between the first UE and the third UE is determined based on the first auxiliary information and third auxiliary information, where the third auxiliary information includes information corresponding to the third UE for determining the second CSI. Alternatively, the location association between the first UE and the third UE is determined based on the first CSI and third CSI, where the third CSI is CSI between the network device and the third UE.

In some embodiments, in response to that the first UE and the third UE have the location association as described above, it is determined that there is a location correlation between the first UE and the third UE.

In some embodiments, in response to that the distance between the first UE and the third UE is less than the first threshold, it is determined that there is a location correlation between the first UE and the third UE. The distance between the first UE and the third UE is determined based on the first auxiliary information and the second auxiliary information.

In the present disclosure, the first threshold is determined by the network device, or agreed upon by the communication protocol, or determined through negotiation between the network device and the UE.

In the present disclosure, the second threshold is determined by the network device, or agreed upon by the communication protocol, or determined through negotiation between the network device and the UE.

In the present disclosure, the third threshold is determined by the network device, or agreed upon by the communication protocol, or determined through negotiation between the network device and the UE.

In some embodiments, step 320 may be implemented as step 320a or step 320b.

In step 320a, the first auxiliary information from the first UE is received.

In some embodiments, before performing step 320a, the network device transmits a second signal to the first UE. The second signal is used to determine the first auxiliary information.

In the embodiments of the present disclosure, the second signal includes a reference signal, or the second signal includes an auxiliary signal.

In the embodiments of the present disclosure, the second signal includes a reference signal for determining the auxiliary information, or the second signal includes an auxiliary signal for determining the auxiliary information.

In some embodiments, the second signal includes a downlink reference signal. For example, the second signal includes a signal used for downlink channel measurement.

In the embodiments of the present disclosure, the second signal includes at least one of:
- a synchronization signal;
- a positioning reference signal (PRS);
- a tracking reference signal (TRS); or
- a channel state information reference signal (CSI-RS).

In some embodiments, the first UE transmits the first auxiliary information periodically, or transmits the first auxiliary information based on a semi-static configuration, or transmits the first auxiliary information non-periodically.

In some embodiments, the network device transmits the second signal periodically, or transmits the second signal based on a semi-static configuration, or transmits the second signal non-periodically.

In step 320b, the first auxiliary information is determined based on a first signal transmitted by the first UE.

In some embodiments, the first auxiliary information is determined based on a measurement result of the first signal transmitted by the first UE.

In the embodiments of the present disclosure, the measurement result may be represented by at least one of: a reference signal receiving power (RSRP) value, a reference signal strength indicator (RSSI) value, a reference signal receiving quality (RSRQ) value, a signal to interference plus noise ratio (SINR) value, a cross link interference (CLI) value, or a channel state information (CSI) value.

In the embodiments of the present disclosure, the first signal includes a reference signal, or the first signal includes an auxiliary signal.

In the embodiments of the present disclosure, the first signal includes a reference signal for determining the auxiliary information, or the first signal includes an auxiliary signal for determining the auxiliary information.

In some embodiments, the first signal includes an uplink reference signal. For example, the first signal includes a signal used for uplink channel measurement.

In some embodiments, the first signal includes at least one of:
- a demodulation reference signal (DMRS); or
- a sounding reference signal (SRS).

In some embodiments, the first UE transmits the first signal periodically, or transmits the first signal based on a semi-static configuration, or transmits the first signal non-periodically.

In step 340, the second auxiliary information is aquired.

In some embodiments, the second auxiliary information includes at least one of:
- location information of the second UE;
- distance information between the second UE and the network device;
- orientation information of the second UE relative to the network device;
- beam information corresponding to the second UE; or
- location correlation between the first UE and the second UE.

The location information of the second UE is used to indicate an absolute location and/or relative location of the second UE.

In some embodiments, the absolute location refers to latitude and longitude location. The absolute location may also be called an absolute geographical location. For example, the location information may indicate the absolute location of the second UE using latitude and longitude or coordinates.

In some embodiments, the relative location refers to a location relative to a reference point, and the reference point may be the first UE, the network device, a third UE, or another UE. The relative location is also called a relative geographical location. For example, the location information may indicate the relative location of the second UE by coordinates; alternatively, the location information may indicate the relative location of the second UE by latitude and longitude offset values relative to the reference point. For example, the reference point is the network device. Within a cell range corresponding to the network device, several areas are divided with the network device as the reference point. The relative location of the first UE is indicated by an area number, an area index, or an area ID.

The location information of the second UE carried by the second auxiliary information may help the network device know a location of the second UE.

The distance information between the second UE and the network device is used to indicate a distance between the second UE and the network device.

The orientation information of the second UE relative to the network device is used to indicate an orientation of the second UE relative to the network device. For example, the orientation of the second UE relative to the network device may be represented by east, south, west, north, southeast, southwest, northeast, or northwest. For example, the orientation of the second UE relative to the network device may be represented by latitude and longitude offset values. For example, the orientation of the second UE relative to the network device may be represented by a relative angle. For example, the orientation of the second UE relative to the network device may be represented by coordinates.

The beam information corresponding to the second UE is used to indicate beam used by the second UE when performing uplink transmission and/or downlink transmission.

The location correlation between the second UE and the first UE is used to indicate that the first UE and the second UE have a location association.

In some embodiments, the first UE and the second UE have at least one of the following location associations:
- a distance between the second UE and the first UE is less than a first threshold;
- the second UE and the first UE belong to the same area;
- a first distance and a second distance are the same, where the first distance refers to a distance between the first UE and the network device, and the second distance refers to a distance between the second UE and the network device;
- a difference value between the first distance and the second distance is less than a second threshold;
- the second UE and the first UE are in the same orientation relative to the network device; or
- an angle between the orientation of the second UE relative to the network device and the orientation of the first UE relative to the network device is less than a third threshold.

In some embodiments, the location association between the first UE and the second UE is determined based on the first auxiliary information and the second auxiliary information.

In some embodiments, in response to that the first UE and the second UE have the location association as described above, it is determined that there is a location correlation between the first UE and the second UE.

In some embodiments, in response to that the distance between the first UE and the second UE is less than the first threshold, it is determined that there is a location correlation between the first UE and the second UE. The distance between the first UE and the second UE is determined based on the first auxiliary information and the second auxiliary information.

In some embodiments, step 340 may be implemented as step 340a or step 340b.

In step 340a, the second auxiliary information from the second UE is received.

In some embodiments, before performing step 340a, the network device transmits a second signal to the second UE. The second signal is used to determine the second auxiliary information. The design of the second signal is as described above.

In some embodiments, the second UE transmits the second auxiliary information periodically, or transmits the second auxiliary information based on a semi-static configuration, or transmits the second auxiliary information non-periodically.

In some embodiments, the network device transmits the second signal periodically, or transmits the second signal based on a semi-static configuration, or transmits the second signal non-periodically.

In step 340b, the second auxiliary information is determined based on a first signal transmitted by the second UE.

In some embodiments, the second auxiliary information is determined based on a measurement result of the first signal transmitted by the second UE.

The related contents of the first signal and the measurement result are as described above.

In some embodiments, the second UE transmits the first signal periodically, or transmits the first signal based on a semi-static configuration, or transmits the first signal non-periodically.

In step 360, the first CSI is acquired.

The first CSI is the CSI between the network device and the first UE. As for the related content of the first CSI, reference may be made to step 220, which will not be repeated here.

In some embodiments, the CSI includes at least one of: a CQI, a PMI, a CRI, a SSBRI, a layer indicator, a rank indicator, or L1-RSRP.

In some embodiments, step 360 may be implemented as step 360a and/or step 360b.

In step 360a, the first CSI reported by the first UE is received.

In some embodiments, before performing step 360a, the network device transmits a third signal to the first UE. The first UE determines the first CSI based on a measurement result of the third signal, and the first UE feeds back the first CSI to the network device.

In some embodiments, the third signal includes at least one of: a synchronization signal, a PRS, a TRS, or a CSI-RS.

In some embodiments, the third signal is the same as the second signal. That is, the signal used by the first UE to determine the first CSI is the same as the signal used to determine the first auxiliary information.

In some embodiments, the third signal is different from the second signal. That is, the signal used by the first UE to determine the first CSI is different from the signal used to determine the first auxiliary information.

In some embodiments, the third signal differs from the second signal in at least one of the following aspects: transmit period, transmit beam, time-domain resources, frequency-domain resources, transmit interval, and signal type.

The third signal and the second signal have different signal types. For example, the third signal is a CSI-RS, and the second signal is not a CSI-RS. The second signal is, for example, a synchronization signal, a PRS, or a TRS. For example, the third signal is a TRS, and the second signal is not a TRS. The second signal is, for example, a synchronization signal, a PRS, or a CSI-RS. The situation where the third signal is a synchronization signal or a PRS is similar to this, which will not be repeated here.

In some embodiments, the first UE transmits the first CSI periodically, or transmits the first CSI based on a semi-static configuration, or transmits the first CSI non-periodically.

In some embodiments, the network device transmits the third signal periodically, or transmits the third signal based on a semi-static configuration, or transmits the third signal non-periodically.

In step 360b, the first CSI is determined based on a fourth signal transmitted by the first UE.

In some embodiments, the first CSI is determined based on a measurement result of the fourth signal transmitted by the first UE.

In some embodiments, the fourth signal includes at least one of a DMRS or a SRS.

In some embodiments, the fourth signal is the same as the first signal. That is, the signal used by the network device to determine the first CSI is the same as the signal used to determine the first auxiliary information.

In some embodiments, the fourth signal is different from the first signal. That is, the signal used by the network device to determine the first CSI is different from the signal used to determine the first auxiliary information.

In some embodiments, the fourth signal differs from the first signal in at least one of the following aspects: transmit period, transmit beam, time-domain resources, frequency-domain resources, transmit interval, and signal type.

In some embodiments, the first UE transmits the fourth signal periodically, or transmits the fourth signal based on a semi-static configuration, or transmits the fourth signal non-periodically.

In some embodiments, the first CSI received by the network device in step 360a is different from the first CSI determined by the network device in step 360b. For example, the first CSI received by the network device in step 360a represents the channel quality or channel state of the downlink channel from the network device to the first UE; and the first CSI determined by the network device in step 360b represents the channel quality or channel state of the uplink channel from the first UE to the network device.

In step 380, the second CSI is determined based on the first CSI, the first auxiliary information, and the second auxiliary information.

In some embodiments, the second CSI is determined based on the first CSI and channel correlation between the first channel and the second channel.

The channel correlation between the first channel and the second channel is determined based on the first auxiliary information and the second auxiliary information. The first channel includes the channel between the network device and the first UE, and the second channel includes the channel between the network device and the second UE.

In the embodiments of the present disclosure, the first UE(s) include one or more UEs. Therefore, the first channel(s) may refer to one channel (uplink channel or downlink channel) between the network device and one first UE, or may refer to two channels (including uplink channel and downlink channel) between the network device and one first UE, or may refer to a plurality of channels (including uplink channels and/or downlink channels) between the network device and a plurality of first UEs.

In some embodiments, the first UE(s) may be implemented as the terminal device 120 and/or the terminal device 130 as shown in FIG. 1.

In some embodiments, the first UE may be implemented as a low-power terminal, or a zero-power terminal, or an ultra-low-power terminal, or a passive IoT device, or an ambient IoT/A-IoT device. In this case, the power consumption of the first UE is lower than the power consumption of the terminal device 120 and/or the terminal device 130 as shown in FIG. 1, which effectively saves the power consumption of the first UE during the process of the network device acquiring the first CSI and the first auxiliary information.

In some embodiments, the first UE(s) may be implemented as a terminal including a low-power module on the basis of the terminal device 120 and/or the terminal device 130 shown in FIG. 1. The low-power module is also called a zero-power module, or an ultra-low-power module, or a passive IoT module, or an ambient IoT module. In this case, the first UE may use the low-power module to perform operations related to the first CSI and the first auxiliary information, thereby effectively saving the power consumption of the first UE during the process of the network device acquiring the first CSI and the first auxiliary information.

Optionally, the low-power terminal or the low-power module includes at least one of: a main receiver, an auxiliary receiver, an energy harvesting module, a backscatter communication module, a logic processing module, a sensor module, or a memory. Optionally, the logic processing module includes a low-power computing module.

The channel correlation between the first channel and the second channel is used to indicate that the first channel and the third channel have an association.

In some embodiments, the first channel and the second channel have at least one of the following associations:
- a transmitter for the first channel and a transmitter for the second channel are the same;
- a receiver for the first channel and a receiver for the second channel are the same;
- the first UE and the second UE have a location correlation;
- within a first time domain range, a difference value between the channel quality of the first channel and the channel quality of the second channel is less than a fourth threshold.
- within the first time domain range, a precoding parameter of the first channel is the same as a precoding parameter of the second channel.

In some embodiments, the channel correlation between the first channel and the second channel is determined based on the location correlation between the first UE and the second UE.

In some embodiments, the channel correlation between the first channel and the second channel within a second time domain range is determined based on the first CSI and the second CSI within the first time domain range. The second time domain range is later than the first time domain range in the time domain.

It can also be understood that the network device determines whether there is a channel correlation between the first channel and the second channel in the future based on the first CSI and the second CSI in the past, that is, determines whether there is a correlation between the first CSI and the second CSI in the future.

In some embodiments, the network device counts the first CSI and the second CSI within a first time domain range and evaluates correlation between the first CSI and the second CSI in terms of precoding parameters, CSI values (such as CQI values, or PMI values, or CRI values, or SSBRI values, or L1-RSRP values), etc. For example, it evaluates whether the precoding parameters of the first CSI and the second CSI are the same, and evaluates a change relationship between the precoding parameter and time. For example, it evaluates whether the difference value between CSI values of the first CSI and the second CSI is less than the fourth threshold, and evaluates a change relationship between the CSI value and time.

In some embodiments, in response to that the network device determines that there is a correlation between the first CSI and the second CSI within the first time domain range, it is determined that there is a channel correlation between the first channel and the second channel within the second time domain range, and/or it is determined that there is a correlation between the first CSI and the second CSI within the second time domain range.

In some embodiments, the second time domain range and the first time domain range are determined by the network device or agreed upon by the communication protocol.

In some embodiments, the second time domain range may be adjacent to or not adjacent to the first time domain range, and duration of the second time domain range may be the same as or different from duration of the first time domain range.

For example, in response to that the network device determines that the difference value between the first CSI and the second CSI in time period 1 is less than the fourth threshold, it is determined that there is a channel correlation between the first channel and the second channel in time period 2, and/or it is determined that there is a correlation between the first CSI and the second CSI in time period 2, where time period 2 follows time period 1.

For example, in response to that the network device determines that the precoding parameter of the first channel and the precoding parameter of the second channel are the same in time period 1, it is determined that there is a channel correlation between the first channel and the second channel in time period 2, and/or it is determined that there is a correlation between the first CSI and the second CSI in time period 2, where time period 2 follows time period 1.

For example, based on a change relationship (such as functional relationship, positive correlation relationship, negative correlation relationship, etc.) between the first CSI and time and a change relationship between the second CSI and time in time period 1, the network device determines the first CSI and the second CSI in time period 2, and/or, determines the correlation between the first CSI and the second CSI in time period 2, and/or determines the channel correlation between the first channel and the second channel in time period 2.

In the present disclosure, the fourth threshold is determined by the network device, or agreed upon by the communication protocol, or determined through negotiation between the network device and the UE.

In some embodiments, the first CSI, the first auxiliary information, and the second auxiliary information are input into a first artificial intelligence (AI) model to acquire the second CSI.

In some embodiments, the first AI model is trained by the network device, or trained by other devices (the terminal device or other network devices) and then transmitted to the network device, or jointly trained by the network device and other devices.

In some embodiments, CSI acquired through an AI model may have high accuracy. For example, the network device may further acquire the CSI between the network device and the first UE through the AI model, and the CSI is superior to the first CSI in step 360 in terms of accuracy and precision. Optionally, the first CSI represents the channel quality within the first time domain range, and the CSI acquired through the AI model represents the channel quality within the second time domain range, where the second time domain range is later than the first time domain range in the time domain.

In some embodiments, the network device may acquire the second CSI corresponding to the second UE by inputting the first CSI, the first auxiliary information, and the second auxiliary information into the AI model without needing to measure the reference signal from the second UE or without needing the second UE to feed back CSI, thereby saving the power consumption and resource overhead for the second UE to transmit the reference signal and feed back the second CSI, reducing the overall resource overhead and device power consumption in the communication system, and improving the efficiency of acquiring CSI in the communication system.

In some embodiments, the network device determines the channel correlation between the first channel and the second channel within the second time domain range through the AI model.

In some embodiments, the network device inputs the first CSI and the second CSI within the first time domain range into the AI model, to acquire the first CSI and the second CSI within the second time domain range, and/or to acquire the channel correlation between the first channel and the second channel within the second time domain range.

In some embodiments, the AI model includes a machine learning (ML) model.

In some embodiments, the network device transmits signals and/or data to the first UE based on the first CSI. The signals include one or more of: system information, control signals, reference signals, or synchronization signals.

In some embodiments, the network device transmits signals and/or data to the second UE based on the second CSI. The signals include one or more of: system information, control signals, reference signals, or synchronization signals.

In some embodiments, the network device transmits signals and/or data to the first UE based on the CSI output by a first AI model. In some embodiments, the network device transmits signals and/or data to the second UE based on the CSI output by the first AI model. In some embodiments, the network device transmits signals and/or data to the third UE based on the CSI output by the first AI model.

It should be noted that steps 320, 340, and 360 are optional. The above steps may be used individually or in combination. For example, step 320 may be implemented as an information acquisition method individually; or step 340 may be implemented as an information acquisition method individually; or step 360 may be implemented as an information acquisition method individually; or steps 320 and 340 may be combined to implement an information acquisition method; or steps 320 and 360 may be combined to implement an information acquisition method; or steps 340 and 360 may be combined to implement an information acquisition method; or steps 320, 340, and 360 may be combined to implement an information acquisition method; or steps 320, 340, 360, and 380 may be combined to implement an information acquisition method. The above steps may be combined freely; for example, steps 320 and 360 may be combined into one step; or steps 320 and 340 may be combined into one step. The execution order of the above steps may be adjusted according to actual situations. For example, step 340 may be executed before step 320; or step 360 may be executed before step 320; or step 360 may be executed before step 340.

In summary, the method provided in the embodiments of the present disclosure supports that the network device acquires the second CSI through the first CSI and the auxiliary information. The second UE does not need to perform the reference signal measurement or CSI feedback, and there is no need to transmit and measure reference signals between the network device and the second UE to acquire the second CSI, thus saving the power consumption for the network device and the second UE, as well as the resource overhead required to acquire the second CSI.

From the perspective of the communication system, CSI of a part of UEs may be acquired through CSI of another part of UEs, which greatly improves the efficiency of acquiring CSI of each UE in the communication system and saves the overall resource overhead and device power consumption in the communication system.

Furthermore, the AI model is introduced, which may further improve the accuracy, precision, and efficiency of CSI acquisition, and further enhance the efficiency and flexibility of CSI acquisition within the communication system, making it easier for the network device to acquire, update, and maintain the CSI corresponding to each UE.

In addition, multiple manners for acquiring the first CSI and the auxiliary information are provided, which greatly improve the flexibility of acquiring the first CSI and the auxiliary information in the communication system, thereby supporting the network device to measure the signal(s) transmitted by the UE to acquire the first CSI or the auxiliary information, and supporting the network device to directly receive the first CSI or the auxiliary information reported by the UE. The robustness of the channel state information acquisition method is improved, and the manners are suitable for CSI acquisition in various communication scenarios.

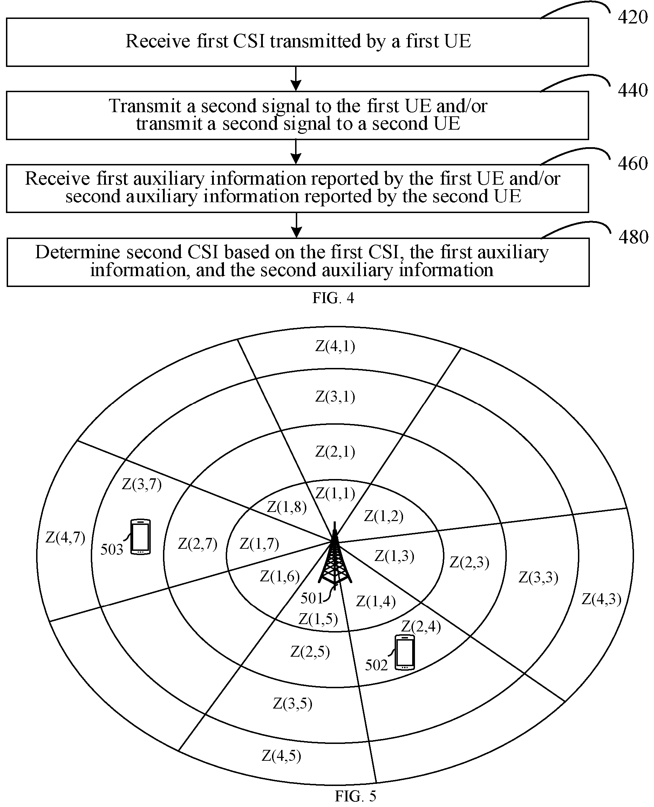

In some embodiments, step 220 may be implemented as step 480. Optionally, in addition to step 480, the channel state information acquisition method may further include one or more of steps 420, 440, and 460, as shown in FIG. 4. FIG. 4 shows a schematic flowchart of a channel state information acquisition method provided in an exemplary embodiment of the present disclosure. The method is performed by the network device shown in FIG. 1 or FIG. 2, and the method includes:
step 420 in which first CSI transmitted by a first UE is received.

The first CSI is CSI between the network device and the first UE. As for the related content of the first CSI, reference can be made to step 220; which will not be repeated here.

In some embodiments, the CSI includes at least one of: a CQI, a PMI, a CRI, an SSBRI, a layer indicator, a rank indicator, or L1-RSRP.

In some embodiments, before performing step 410, the network device transmits a CSI-RS to the first UE. The first UE measures the CSI-RS transmitted by the network device to acquire the first CSI. The first UE feeds back the acquired first CSI to the network device.

In some embodiments, the network device further configures a CSI report for the first UE, and the CSI report includes one or more related parameters from aspects such as codebook, time domain resources, frequency domain resources, CSI measurement, and CSI reporting.

In some embodiments, the first UE measures the CSI-RS transmitted by the network device based on parameters in the CSI report configured by the network device, and reports the first CSI to the network device.

In step 440, a second signal is transmitted to the first UE, and/or a second signal is transmitted to a second UE.

As for the related content of the second signal, reference can be made to steps 320 and 340, which will not be repeated here.

In step 460, first auxiliary information reported by the first UE is received, and/or second auxiliary information reported by the second UE is received.

As for the related content of the first auxiliary information, reference can be made to step 320; as for the related content of the second auxiliary information, reference can be made to step 340; and details will not be repeated here.

For example, distance information between the first UE and the network device is acquired by the first UE measuring the second signal. For example, the first UE estimates a distance between the first UE and the network device by calculating path loss. For another example, the first UE calculates the distance between the first UE and the network device using time of arrival (TOA) or time difference of arrival (TDOA). The method of acquiring distance information through TOA may be called a TOA positioning technology, and the method of acquiring distance information through TDOA may be called a TDOA positioning technology. It should be understood that other positioning methods that can obtain distance information are also applicable to the present disclosure, which will not be listed here.

Similarly, as for distance information between the second UE and the network device, reference can be made to the above content.

For example, orientation information of the first UE relative to the network device is acquired by the first UE measuring the second signal. For example, the first UE acquires an orientation of the first UE relative to the network device using an angle of arrival (AOA) positioning technology. The AOA positioning technology is a positioning method based on an angle of arrival of a signal. A transmitting end transmits a direction-finding signal using a single antenna. A device at a receiving end has a built-in antenna array, and when the signal passes through, a phase difference will occur due to different distances received in the antenna array. The receiving end may calculate a relative signal direction based on the phase difference. It should be understood that other positioning methods that can acquire orientation information are also applicable to the present disclosure, which will not be listed here.

Similarly, as for the orientation information of the second UE relative to the network device, reference can be made to the above content.

For example, beam information corresponding to the first UE is acquired by the first UE measuring the second signal. For example, when the first UE receives or detects downlink signals, the first UE determines a downlink signal with high reception quality, and feeds back one or more of the following to the network device: a beam direction corresponding to the downlink signal, a beam index corresponding to the downlink signal, and a signal index corresponding to the downlink signal. The network device may directly receive the beam information fed back by the first UE, or may determine the beam information based on information fed back by the first UE.

Similarly, as for the beam information corresponding to the second UE, reference can be made to the above content.

For example, absolute location information of the first UE may be acquired by the first UE acquiring its own coordinates or latitude and longitude through a positioning system and then feeding back the coordinates or latitude and longitude to the network device. The positioning system may be, for example, Beidou system, global positioning system (GPS), etc.

For example, relative location information of the first UE may be represented by an area numner within a cell. For example, the network device transmits downlink signals with different power and/or different signal formats and/or different beam directions, and determines a relative position of each UE within the cell based on detection results of each UE on the downlink signals. For example, the network device receives uplink signals with different power and/or different signal formats and/or different beam directions, and determines the relative position of each UE within the cell based on detection results of the uplink signals.

Similarly, as for the location information corresponding to the second UE, reference can be made to the above content.

As shown in FIG. 5, the network device 501 defines several regions Z(x, y) within the cell by scanning downlink signals with different power and/or different signal formats and/or different beam directions, where x belongs to [1, 4], and 1 to 4 represent transmit power from low to high, or 1 to 4 represent different signal formats; y belongs to [1, 8], and 1 to 8 represent different transmit directions. The network device scans all locations within the cell using the downlink signals with different power and/or different signal formats and/or different beam directions. The UEs that receive the downlink signals feed back measurement results or auxiliary information of the downlink signals, and the network device determines areas to which the UEs belong based on the measurement results or auxiliary information of the downlink signals. For example, the network device transmits downlink signals in eight directions in an ascending order of transmit power for scanning. In a case where the transmit power corresponds to x = 2 and the transmit direction corresponds to y = 4, the UE 502 receives a downlink signal, the UE 502 measures the downlink signal and feeds back a measurement result or auxiliary information to the network device 501, and the network device 501 determines that the UE 502 is located in the area Z(2, 4) based on the transmit direction and transmit power of the downlink signal and information fed back by the UE 502. In a case where the transmit power corresponds to x = 3 and the transmit direction corresponds to y = 7, the UE 503 receives a downlink signal, the UE 503 measures the downlink signal and feeds back a measurement result or auxiliary information to the network device 501, and the network device 501 determines that the UE 503 is located in the area Z(3, 7) based on the transmit direction and transmit power of the downlink signal and information fed back by the UE 503.

For example, location correlation between the first UE and a third UE may be acquired by the first UE through sidelink communication between the first UE and the third UE. The first UE acquires the location correlation between the first UE and the third UE and reports the location correlation to the network device. For example, in a case where a distance between the first UE and the third UE is less than a first threshold, the first UE reports the location correlation between the first UE and the third UE to the network device; or, the first UE reports that the distance between the first UE and the third UE is less than the first threshold to the network device. Optionally, the third UE may report the location correlation between the third UE and the first UE to the network device, or the third UE may report that the distance between the third UE and the first UE is less than the first threshold to the network device.

Similarly, as for the location correlation between the first UE and the second UE, reference can be made to the above content.

In step 480, second CSI is determined based on the first CSI, the first auxiliary information, and the second auxiliary information.

In some embodiments, the network device may acquire channel correlation between a first channel and a second channel based on the received first auxiliary information and second auxiliary information. For example, the network device estimates that the first auxiliary information and the second auxiliary information have quasi-colocation (QCL) features based on the first auxiliary information and the second auxiliary information.

As for the related content of step 480, reference can be made to step 380.

In some embodiments, the network device determines a first UE that has a location correlation with a second UE based on first auxiliary information received from a plurality of first UEs and second auxiliary information received from the second UE. Since CSI of two UEs that have a location correlation are similar, the second CSI of the second UE may be determined based on first CSI of the first UE that has the location correlation with the second UE.

In some embodiments, the first CSI, the first auxiliary information, and the second auxiliary information are input into a first AI model to acquire the second CSI.

In some embodiments, the first AI model is trained by the network device, or trained by other devices (the terminal device or other network devices) and then transmitted to the network device, or jointly trained by the network device and other devices.

By applying the AI model or ML model, the overhead of CSI feedback may be reduced, the accuracy of channel state information may be improved, thereby improving the performance of the communication system, reducing complexity, and saving power consumption and resource overhead.

In some embodiments, the network device acquires CSI of wireless channels from different locations to the network device within the cell by performing data analysis and model training based on the first CSI and the first auxiliary information using an AI/ML algorithm. By using the AI/ML algorithm, CSI of a wireless channel between the second UE and the network device may be determined based on the second auxiliary information.

In some embodiments, by iterating the CSI within the cell multiple times, the network device may acquire more accurate CSI through the AI/ML algorithm. In this way, the network device may maintain a database of CSI within a cell, including CSI between different locations and the network device, which is continuously updated and iterated based on the acquired CSI feedback and auxiliary information. In a case where there is a need to determine CSI of a second UE located at a certain location or CSI of a second UE associated with a first UE, the network device may directly acquire the CSI of the second UE through the database of the CSI, without needing to transmit a reference signal or provide the latest CSI feedback to the second UE.

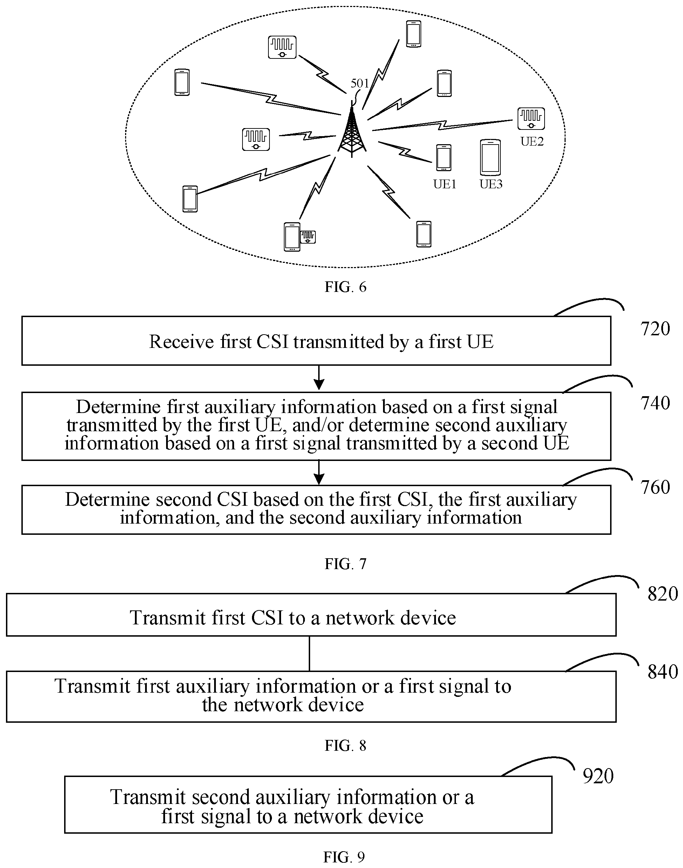

For example, as shown in FIG. 6, the network device 501 acquires first CSI and first auxiliary information fed back by a plurality of first UEs in the cell. The network device 501 estimates channel correlation or location correlation between UE1 and UE3 and channel correlation or location correlation between UE2 and UE3 using auxiliary information fed back by UE1 and UE2. Based on the channel correlation or location correlation as well as the CSI fed back by UE1 and UE2, the network device may determine CSI of UE3. The CSI of UE3 may be the same as the CSI fed back by UE1 or UE2, or the CSI of UE3 may be calculated from the CSI fed back by UE1 or UE2. For example, the CSI of UE3 is an average result of the CSI of UE1 and the CSI of UE2, or the CSI of UE3 is the worst value among the CSI of UE1 and the CSI of UE2, or the CSI of UE3 is the optimal value among the CSI of UE1 and the CSI of UE2.

Furthermore, the network device may further acquire the latest CSI of UE3 based on CSI previously fed back by UE3.

It should be noted that steps 420, 440, and 460 are optional. The above steps may be used individually or in combination. For example, step 420 may be implemented as an information acquisition method individually; or step 440 may be implemented as an information acquisition method individually; or step 460 may be implemented as an information acquisition method individually; or steps 420 and 460 may be combined to implement an information acquisition method; or steps 420, 440 and 460 may be combined to implement an information acquisition method; or steps 420, 440, 460 and 480 may be combined to implement an information acquisition method. The above steps may be combined freely; for example, steps 420 and 460 may be combined into one step. The execution order of the above steps may be adjusted according to actual situations. For example, step 440 may be executed before step 420; or step 460 may be executed before step 420.

In summary, the method provided in the embodiments of the present disclosure supports that the network device acquires the second CSI through the first CSI and the auxiliary information. The second UE does not need to perform the reference signal measurement or CSI feedback, and there is no need to transmit and measure reference signals between the network device and the second UE to acquire the second CSI, thus saving the power consumption for the network device and the second UE and reducing the total CSI feedback and total reference signal feedback in the communication system. From the perspective of the communication system, CSI of a part of UEs may be acquired through CSI of another part of UEs, which greatly improves the efficiency of acquiring CSI of each UE in the communication system and saves the overall resource overhead and device power consumption in the communication system. Furthermore, the AI model is introduced, which may further improve the accuracy, precision, and efficiency of CSI acquisition, and further enhance the efficiency and flexibility of CSI acquisition within the communication system, making it easier for the network device to acquire, update, and maintain the CSI corresponding to each UE.

In some embodiments, step 220 may be implemented as step 760. Optionally, in addition to step 760, the channel state information acquisition method may further include one or more of steps 720 and 740, as shown in FIG. 7. FIG. 7 shows a schematic flowchart of a channel state information acquisition method provided in an exemplary embodiment of the present disclosure. The method is performed by the network device shown in FIG. 1 or FIG. 2, and the method includes the following content.

In step 720, first CSI transmitted by a first UE is received.

As for the related content, reference can be made to step 420, which will not be repeated here.

In step 740, first auxiliary information is determined based on a first signal transmitted by the first UE, and/or second auxiliary information is determined based on a first signal transmitted by a second UE.

In some embodiments, the network device measures the first signal transmitted by the first UE, and determines the first auxiliary information based on a measurement result.

In some embodiments, the network device measures the first signal transmitted by the second UE, and determines the second auxiliary information based on a measurement result.

For example, distance information between the first UE and the network device is acquired by the network device measuring the first signal. For example, the network device determines the distance information based on the measurement result (such as an RSRP value, RSSI value, RSRQ value, or SINR value) of the first signal. It should be understood that other methods of acquiring distance information (such as TOA positioning technology, TDOA positioning technology, etc.) are also applicable to the present disclosure, which will not be listed here.

Similarly, as for distance information between the second UE and the network device, reference can be made to the above content.

For example, orientation information of the first UE relative to the network device is acquired by the network device measuring the first signal. For example, the network device acquires an orientation of the first UE relative to the network device using the AOA positioning technology. It should be understood that other positioning methods that can acquire orientation information are also applicable to the present disclosure, which will not be listed here.

Similarly, as for the orientation information of the second UE relative to the network device, reference can be made to the above content.

For example, beam information corresponding to the first UE is acquired by the network device based on an index of the first signal, or by indication information carried by the first signal.

Similarly, as for the beam information corresponding to the second UE, reference can be made to the above content.

For example, absolute location information of the first UE may be acquired by the first UE acquiring its own coordinates or latitude and longitude through a positioning system and then feeding back the coordinates or latitude and longitude to the network device.

For example, relative location information of the first UE may be represented by an area numner within a cell. For example, the network device transmits downlink signals with different power and/or different signal formats and/or different beam directions, and determines a relative position of each UE within the cell based on detection results of each UE on the downlink signals. For example, the network device receives uplink signals with different power and/or different signal formats and/or different beam directions, and determines the relative position of each UE within the cell based on detection results of the uplink signals.

Similarly, as for the location information corresponding to the second UE, reference can be made to the above content.

For example, location correlation between the first UE and the second UE may be determined using the first auxiliary information and the second auxiliary information. For example, the first auxiliary information and the second auxiliary information indicate that a distance between the first UE and the second UE is less than a first threshold, and the network device determines that the first UE and the second UE have a location correlation.

In step 760, second CSI is determined based on the first CSI, the first auxiliary information, and the second auxiliary information.

As for the related content, reference can be made to step 380 or step 480, which will not be repeated here.

It should be noted that steps 720 and 740 are optional. The above steps may be used individually or in combination. For example, step 720 may be implemented as an information acquisition method individually; or step 740 may be implemented as an information acquisition method individually; or steps 720 and 760 may be combined to implement an information acquisition method; or steps 720, 740 and 760 may be combined to implement an information acquisition method; or steps 720, 740 and 760 may be combined to implement an information acquisition method. The above steps may be combined freely; for example, steps 720 and 740 may be combined into one step. The execution order of the above steps may be adjusted according to actual situations. For example, step 740 may be executed before step 720.

In summary, the method provided in the embodiments of the present disclosure supports that the network device acquires the second CSI through the first CSI and the auxiliary information. The second UE does not need to perform the reference signal measurement or CSI feedback, and there is no need to transmit and measure reference signals between the network device and the second UE to acquire the second CSI, thus saving the power consumption for the network device and the second UE and reducing the total CSI feedback and total reference signal feedback in the communication system. From the perspective of the communication system, CSI of a part of UEs may be acquired through CSI of another part of UEs, which greatly improves the efficiency of acquiring CSI of each UE in the communication system and saves the overall resource overhead and device power consumption in the communication system. Furthermore, the AI model is introduced, which may further improve the accuracy, precision, and efficiency of CSI acquisition, and further enhance the efficiency and flexibility of CSI acquisition within the communication system, making it easier for the network device to acquire, update, and maintain the CSI corresponding to each UE.

FIG. 8 shows a schematic flowchart of a channel state information acquisition method provided in an exemplary embodiment of the present disclosure. The method is performed by a first terminal device, and the first terminal device may be implemented as the terminal device shown in FIG. 1. The method includes:
step 820 in which first CSI is transmitted to a network device.

The first CSI is CSI between the network device and the first UE.

In some embodiments, the first CSI is CSI of a downlink channel between the network device and the first UE. In other words, the first CSI may reflect channel quality or channel state changes of the downlink channel from the network device to the first UE. The second CSI is CSI of a downlink channel between the network device and the second UE. In other words, the second CSI may reflect channel quality or channel state changes of the downlink channel from the network device to the second UE.

In some embodiments, the first CSI is CSI of an uplink channel between the network device and the first UE. In other words, the first CSI may reflect channel quality or channel state changes of the uplink channel from the first UE to the network device. The second CSI is CSI of an uplink channel between the network device and the second UE. In other words, the second CSI may reflect channel quality or channel state changes of the uplink channel from the second UE to the network device.

In some embodiments, the first CSI is the CSI of the downlink channel between the network device and the first UE, and the second CSI is the CSI of the uplink channel between the network device and the second UE.

In some embodiments, the first CSI is the CSI of the uplink channel between the network device and the first UE, and the second CSI is the CSI of the downlink channel between the network device and the second UE.

In step 840, first auxiliary information or a first signal is transmitted to the network device.

The first signal is used to determine the first auxiliary information. The first auxiliary information includes information corresponding to the first UE for determining the second CSI. The second CSI is CSI between the network device and the second UE.

In some embodiments, the CSI includes at least one of: a CQI, a PMI, a CRI, an SSBRI, a layer indicator, a rank indicator, or L1-RSRP.

In some embodiments, the first UE may be implemented as a low-power terminal, or a zero-power terminal, or an ultra-low-power terminal, or a passive IoT device, or an A-IoT device.

In some embodiments, the first UE includes a low-power module, or a zero-power module, or an ultra-low-power module, or a passive IoT module, or an A-IoT module.

The design of the low-power terminal or low-power module facilitates the reduction of power consumption and complexity when the first UE performs operations related to the first CSI and the first auxiliary information.

In some embodiments, before transmitting the first auxiliary information to the network device, the first UE receives a second signal from the network device, the second signal being used to determine the first auxiliary information.

As for the content related to the first auxiliary information, the second signal and the first signal, reference can be made to step 320, which will not be repeated here.

It should be noted that steps 820 and 840 may be combined into one step. The execution order of steps 820 and 840 may be adjusted according to actual situations. For example, step 840 may be executed before step 820.

In summary, in the method provided in the embodiments of the present disclosure, the first CSI and the first auxiliary information, or the first CSI and the first signal, transmitted by a first terminal device, are used to determine the second CSI. Therefore, the network device acquires the second CSI without needing reference signal measurement or CSI feedback between the network device and the second terminal device, which effectively reduces the power consumption and resource overhead required for the reference signal measurement or CSI feedback of the communication device. Furthermore, it eliminates the need for the vector quantization or codebook-based method to reduce the air interface resources required for CSI feedback, thus avoiding the loss of channel information between the network device and the second UE.

FIG. 9 shows a schematic flowchart of a channel state information acquisition method provided in an exemplary embodiment of the present disclosure. The method is performed by a second terminal device, and the second terminal device may be implemented as the terminal device shown in FIG. 1. The method includes:
step 920 in which second auxiliary information or a first signal is transmitted to a network device.

The first signal is used to determine the second auxiliary information. The second auxiliary information includes information corresponding to the second UE for determining second CSI. The second CSI is CSI between the network device and the second UE.

In some embodiments, the CSI includes at least one of: a CQI, a PMI, a CRI, an SSBRI, a layer indicator, a rank indicator, or L1-RSRP.

In some embodiments, before transmitting the second auxiliary information to the network device, the second UE receives a second signal from the network device, the second signal being used to determine the second auxiliary information.

As for the content related to the second auxiliary information, the second signal and the first signal, reference can be made to step 340, which will not be repeated here.

In summary, in the method provided in the embodiments of the present disclosure, the second auxiliary information transmitted by the second terminal device is used to determine the second CSI. Therefore, the network device acquires the second CSI without needing CSI feedback between the network device and the second terminal device, which effectively reduces the power consumption and resource overhead required for the reference signal measurement or CSI feedback of the communication device. Furthermore, it eliminates the need for the vector quantization or codebook-based method to reduce the air interface resources required for CSI feedback, thus avoiding the loss of channel information between the network device and the second terminal device.

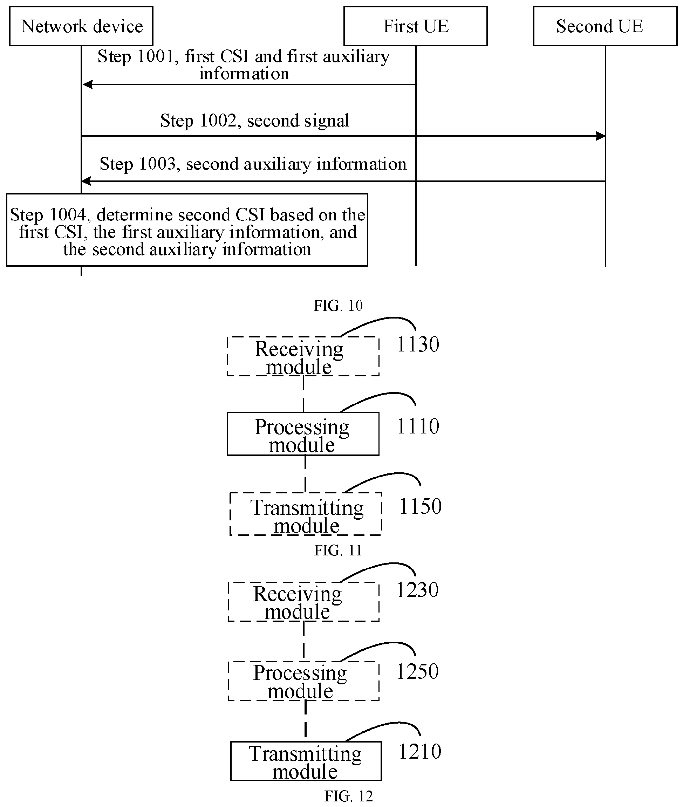

FIG. 10 shows a schematic flowchart of a channel state information acquisition method provided in an exemplary embodiment of the present disclosure. The method is performed by a network device, a first terminal device, and a second terminal device. The network device may be implemented as the network device shown in FIG. 1, FIG. 2, FIG. 3, FIG. 4, or FIG. 7. The first terminal device may be implemented as the terminal device shown in FIG. 1 or FIG. 8. The second terminal device may be implemented as the terminal device shown in FIG. 1 or FIG. 9. The method includes the following content.

In step 1001, the first UE transmits first CSI and first auxiliary information to the network device.

As for the related content of the first CSI, reference can be made to step 360, step 420, step 720, or step 820; as for the related content of the first auxiliary information, reference can be made to step 320, step 460, step 740, or step 840; and details will not be repeated here.

In step 1002, the network device transmits a second signal to the second UE.

As for the related content of the second signal, reference can be made to step 340, step 440, step 720, or step 820, which will not be repeated here.

In step 1003, the network device receives second auxiliary information transmitted by the second UE.

As for the related content of the second auxiliary information, reference can be made to step 340, step 460, step 740, or step 920, which will not be repeated here.

In step 1004, the network device determines second CSI based on the first CSI, the first auxiliary information, and the second auxiliary information.

As for the related content, reference can be made to step 380, step 480, or step 760, which will not be repeated here.

In summary, in the method provided in the embodiments of the present disclosure, the second CSI may be acquired through the first CSI, the first auxiliary information, and the second auxiliary information, which effectively reduces the power consumption and resource overhead required for the reference signal measurement or CSI feedback of the communication device. Furthermore, it eliminates the need for the vector quantization or codebook-based method to reduce the air interface resources required for CSI feedback, thus avoiding the loss of channel information between the network device and the second UE. In addition, it greatly improves the efficiency of acquiring CSI of each UE in the communication system and saves the overall resource overhead and device power consumption in the communication system. Moreover, the AI model is introduced, which may further improve the accuracy, precision, and efficiency of CSI acquisition, and further enhance the efficiency and flexibility of CSI acquisition within the communication system, making it easier for the network device to acquire, update, and maintain the CSI corresponding to each UE.

FIG. 11 shows a structural block diagram of a channel state information acquisition apparatus provided in an exemplary embodiment of the present disclosure. The apparatus may be implemented as the network device as shown in FIG. 1, FIG. 2, FIG. 3, FIG. 4, or FIG. 7, or as part of the network device as shown in FIG. 1, FIG. 2, FIG. 3, FIG. 4, or FIG. 7. The apparatus includes a processing module 1110. Optionally, the apparatus may further include a receiving module 1130 and/or a transmitting module 1150.

The processing module 1110 determines second CSI based on first CSI and auxiliary information.

The first CSI is CSI between the apparatus and a first terminal device, the second CSI is CSI between the apparatus and a second terminal device, and the auxiliary information includes information corresponding to a terminal device for determining the second CSI.

In some embodiments, the auxiliary information includes first auxiliary information corresponding to the first terminal device and/or second auxiliary information corresponding to the second terminal device.

In some embodiments, the apparatus further includes a receiving module 1130 configured to receive the first auxiliary information from the first terminal device.

In some embodiments, the processing module 1110 is further configured to determine the first auxiliary information based on a first signal transmitted by the first terminal device.

In some embodiments, the apparatus further includes a transmitting module 1150 configured to transmit a second signal to the first terminal device, the second signal being used to determine the first auxiliary information.

In some embodiments, the receiving module 1130 is further configured to receive the second auxiliary information from the second terminal device.

In some embodiments, the processing module 1110 is further configured to determine the second auxiliary information based on a first signal transmitted by the second terminal device.

In some embodiments, the transmitting module 1150 is further configured to transmit a second signal to the second terminal device, the second signal being used to determine the second auxiliary information.

In some embodiments, the second signal includes at least one of: a synchronization signal; a PRS; a TRS; or a CSI-RS.

In some embodiments, the processing module 1110 is further configured to determine the first auxiliary information based on a measurement result of the first signal.

In some embodiments, the processing module 1110 is further configured to determine the second auxiliary information based on a measurement result of the first signal.

In some embodiments, the first signal includes at least one of: a DMRS or an SRS.

In some embodiments, the first auxiliary information includes at least one of: location information of the first terminal device; distance information between the first terminal device and the apparatus; orientation information of the first terminal device relative to the apparatus; beam information corresponding to the first terminal device; or location correlation between the first terminal device and a third terminal device, where the third terminal device includes a terminal device other than the first terminal device.

In some embodiments, the second auxiliary information includes at least one of: location information of the second terminal device; distance information between the second terminal device and the apparatus; orientation information of the second terminal device relative to the apparatus; beam information corresponding to the second terminal device; or location correlation between the second terminal device and the first terminal device.

In some embodiments, the processing module 1110 is further configured to determine the second CSI based on channel correlation between a first channel and a second channel as well as the first CSI.

The channel correlation between the first channel and the second channel is determined based on the first auxiliary information and the second auxiliary information. The first channel includes a channel between the apparatus and the first terminal device, and the second channel includes a channel between the apparatus and the second terminal device.

In some embodiments, the channel correlation between the first channel and the second channel is determined based on location correlation between the first terminal device and the second terminal device.

In some embodiments, the processing module 1110 is further configured to determine that the first terminal device and the second terminal device have the location correlation in response to that a distance between the second terminal device and the first terminal device is less than a first threshold.

The distance between the second terminal device and the first terminal device is determined based on the first auxiliary information and the second auxiliary information.

In some embodiments, the processing module 1110 is further configured to input the first CSI, the first auxiliary information and the second auxiliary information into a first AI model to acquire the second CSI.

In some embodiments, the first terminal device includes a low-power device and/or a low-power module.

In summary, the apparatus provided in the embodiments of the present disclosure supports acquiring the second CSI through the first CSI, the first auxiliary information, and the second auxiliary information, which effectively reduces the power consumption and resource overhead required for the reference signal measurement or CSI feedback of the communication device. Furthermore, it eliminates the need for the vector quantization or codebook-based method to reduce the air interface resources required for CSI feedback, thus avoiding the loss of channel information between the apparatus and the second UE. In addition, it greatly improves the efficiency of acquiring CSI of each UE in the communication system and saves the overall resource overhead and device power consumption in the communication system. Moreover, the AI model is introduced, which may further improve the accuracy, precision, and efficiency of CSI acquisition, and further enhance the efficiency and flexibility of CSI acquisition within the communication system, making it easier for the network device to acquire, update, and maintain the CSI corresponding to each UE.

FIG. 12 shows a structural block diagram of a channel state information acquisition apparatus provided in an exemplary embodiment of the present disclosure. The apparatus may be implemented as the terminal device as shown in FIG. 1 or FIG. 8, or as part of the terminal device as shown in FIG. 1 or FIG. 8. The apparatus includes a transmitting module 1210. Optionally, the apparatus may further include a receiving module 1230 and/or a processing module 1250.

The transmitting module 1210 is configured to transmit first CSI to a network device.

The transmitting module 1210 is further configured to transmit first auxiliary information or a first signal to the network device.

The first CSI is CSI between the network device and the apparatus, the first signal is used to determine the first auxiliary information, the first auxiliary information includes information corresponding to the apparatus for determining second CSI, and the second CSI is CSI between the network device and a second terminal device.

In some embodiments, the apparatus further includes a receiving module 1230 configured to receive a second signal from the network device, the second signal being used to determine the first auxiliary information.

In some embodiments, the second signal includes at least one of: a synchronization signal; a PRS; a TRS; or a CSI-RS.

In some embodiments, the first signal includes at least one of: a DMRS; or an SRS.

In some embodiments, the first auxiliary information includes at least one of: location information of the apparatus; distance information between the apparatus and the network device; orientation information of the apparatus relative to the network device; beam information corresponding to the apparatus; and association information between a location of the apparatus and a location of a third terminal device, where the third terminal device is a terminal device other than the apparatus within a signal range of the network device.

In some embodiments, the apparatus includes a low-power device and/or a low-power module.

In some embodiments, the apparatus further includes a processing module 1250 configured to determine the first auxiliary information based on the second signal.

In some embodiments, the processing module 1250 is further configured to determine the first CSI.

In summary, in the apparatus provided in the embodiments of the present disclosure, the first CSI and the first auxiliary information, or the first CSI and the first signal, transmitted by a first terminal device, are used to determine the second CSI. Therefore, the network device acquires the second CSI without needing reference signal measurement or CSI feedback between the network device and the second terminal device, which effectively reduces the power consumption and resource overhead required for the reference signal measurement or CSI feedback of the communication device. Furthermore, it eliminates the need for the vector quantization or codebook-based method to reduce the air interface resources required for CSI feedback, thus avoiding the loss of channel information between the network device and the second UE.

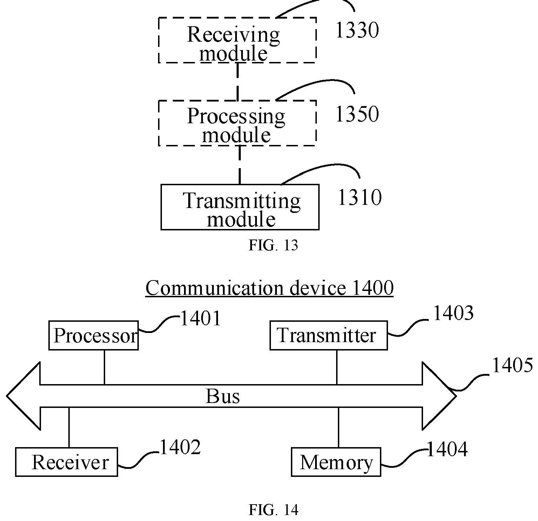

FIG. 13 shows a structural block diagram of a channel state information acquisition apparatus provided in an exemplary embodiment of the present disclosure. The apparatus may be implemented as the terminal device as shown in FIG. 1 or FIG. 9, or as part of the terminal device as shown in FIG. 1 or FIG. 9. The apparatus includes a transmitting module 1310. Optionally, the apparatus may further include a receiving module 1330 and/or a processing module 1350.

The transmitting module 1310 is configured to transmit second auxiliary information or a first signal to a network device.

The first signal is used to determine the second auxiliary information, the second auxiliary information includes information corresponding to the apparatus for determining second CSI, and the second CSI is CSI between the network device and the apparatus.

In some embodiments, the apparatus further includes a receiving module 1330 configured to receive a second signal from the network device, the second signal being used to determine the second auxiliary information.

In some embodiments, the second signal includes at least one of: a synchronization signal; a PRS; a TRS; or a CSI-RS.

In some embodiments, the first signal includes at least one of: a DMRS; or an SRS.

In some embodiments, the second auxiliary information includes at least one of: location information of the apparatus; distance information between the apparatus and the network device; orientation information of the apparatus relative to the network device; beam information corresponding to the apparatus; or association information between a location of the apparatus and a location of a first terminal device.

In some embodiments, the first terminal device includes a low-power device and/or a low-power module.

In some embodiments, the apparatus further includes a processing module 1350 configured to determine the second auxiliary information based on the second signal.

In summary, in the apparatus provided in the embodiments of the present disclosure, the transmitted second auxiliary information is used to determine the second CSI, so that the network device acquires the second CSI without needing CSI feedback between the network device and the apparatus, which effectively reduces the power consumption and resource overhead required for the reference signal measurement or CSI feedback of the communication device. Furthermore, it eliminates the need for the vector quantization or codebook-based method to reduce the air interface resources required for CSI feedback, thus avoiding the loss of channel information between the network device and the apparatus.

FIG. 14 shows a structural schematic diagram of a communication device 1400 provided in an exemplary embodiment of the present disclosure, the communication device 1400 including: a processor 1401, a receiver 1402, a transmitter 1403, a memory 1404, and a bus 1405. The communication device 1400 can be configured to perform at least part of the steps performed by the network device shown in FIG. 1, FIG. 2, FIG. 3, FIG. 4 or FIG. 7, or can be configured to perform at least part of the steps performed by the first terminal device shown in FIG. 1 or FIG. 8, or can be configured to perform at least part of the steps performed by the second terminal device shown in FIG. 1 or FIG. 9.

The processor 1401 includes one or more processing cores, and the processor 1401 executes various functional applications and information processing by running software programs and modules. In some embodiments, the processor 1401 can be configured to implement the functions and steps of the processing module 1110 and/or the processing module 1250 and/or the processing module 1350 described above.

The receiver 1402 and the transmitter 1403 may be implemented as a single communication component, the communication component may be a communication chip, and the communication component may be called a transceiver. In some embodiments, the receiver 1402 can be configured to implement the functions and steps of the receiving module 1130 and/or the receiving module 1230 and/or the receiving module 1330 described above, and the transmitter 1403 can be configured to implement the functions and steps of the transmittng module 1150 and/or the transmittng module 1210 and/or the transmittng module 1310 described above. In some embodiments, the receiver 1402 includes a backscatter transmitter.

The memory 1404 is connected to the processor 1401 via the bus 1405.

The memory 1404 can be configured to store at least one instruction, and the processor 1401 can be configured to execute the at least one instruction to implement various steps in the above method embodiments.

Furthermore, the memory 1404 may be implemented by any type of volatile or non-volatile storage device or a combination thereof, including but not limited to: a magnetic disk or an optical disk, an electrically-erasable programmable read-only memory (EEPROM), an erasable programmable read-only memory (EPROM), a static random access memory (SRAM), a read-only memory (ROM), a magnetic storage, a flash memory, and a programmable read-only memory (PROM).

In some embodiments, the receiver 1402 independently receives signals/data, or the processor 1401 controls the receiver 1402 to receive signals/data, or the processor 1401 requests the receiver 1402 to receive signals/data, or the processor 1401 cooperates with the receiver 1402 to receive signals/data.

In some embodiments, the transmitter 1403 independently transmits signals/data, or the processor 1401 controls the transmitter 1403 to transmit signals/data, or the processor 1401 requests the transmitter 1403 to transmit signals/data, or the processor 1401 cooperates with the transmitter 1403 to transmit signals/data.

In an exemplary embodiment of the present disclosure, a computer-readable storage medium is further provided. The computer-readable storage medium has stored at least one program, and the at least one program is loaded and executed by a processor to implement the channel state information acquisition method provided in any of the above method embodiments.

In an exemplary embodiment of the present disclosure, a chip is further provided. The chip includes a programmable logic circuit and/or program instructions. When run on a communication device, the chip is configured to implement the channel state information acquisition method provided in any of the above method embodiments.

In an exemplary embodiment of the present disclosure, a computer program product is further provided. The computer program product, when run on a processor of a computer device, causes the computer device to perform the above channel state information acquisition method.

In an exemplary embodiment of the present disclosure, a computer program is further provided. The computer program includes computer instructions, and a processor of a computer device executes the computer instructions to cause the computer device to perform the above channel state information acquisition method.

Those skilled in the art will understand that all or part of the steps of the above embodiments can be implemented by hardware or by a program instructing related hardware. The program can be stored in a computer-readable storage medium. The above-mentioned storage medium may be a read-only memory, a disk, or an optical disk.

The foregoing descriptions are merely optional embodiments of the present disclosure and are not intended to limit the present disclosure. Any changes, equivalent substitutions, improvements, etc., made within the spirit and principles of the present disclosure shall be all included in the protection scope of the present disclosure.

## Claims

1. A channel state information acquisition method, performed by a network device, and comprising:
determining second channel state information (CSI) based on first CSI and auxiliary information;
wherein the first CSI is CSI between the network device and a first terminal device, the second CSI is CSI between the network device and a second terminal device, and the auxiliary information comprises information corresponding to a terminal device for determining the second CSI.

2. The method according to claim 1, wherein the auxiliary information comprises first auxiliary information corresponding to the first terminal device and/or second auxiliary information corresponding to the second terminal device.

3. The method according to claim 2, wherein before determining the second CSI based on the first CSI and the auxiliary information, the method further comprises:
receiving the first auxiliary information from the first terminal device; or
determining the first auxiliary information based on a first signal transmitted by the first terminal device.

4. The method according to claim 3, wherein before receiving the first auxiliary information from the first terminal device, the method further comprises:
transmitting a second signal to the first terminal device, the second signal being used to determine the first auxiliary information.

5. The method according to any one of claims 2 to 4, wherein before determining the second CSI based on the first CSI and the auxiliary information, the method further comprises:
receiving the second auxiliary information from the second terminal device; or
determining the second auxiliary information based on a first signal transmitted by the second terminal device.

6. The method according to claim 5, wherein before receiving the second auxiliary information from the second terminal device, the method further comprises:
transmitting a second signal to the second terminal device, the second signal being used to determine the second auxiliary information.

7. The method according to claim 4 or 6, wherein the second signal comprises at least one:
a synchronization signal;
a positioning reference signal (PRS);
a tracking reference signal (TRS); or
a channel state information reference signal (CSI-RS).

8. The method according to claim 3, wherein determining the first auxiliary information based on the first signal transmitted by the first terminal device comprises:
determining the first auxiliary information based on a measurement result of the first signal.

9. The method according to claim 5, wherein determining the second auxiliary information based on the first signal transmitted by the second terminal device comprises:
determining the second auxiliary information based on a measurement result of the first signal.

10. The method according to claim 3, 5, 8, or 9, wherein the first signal comprises at least one of:
a demodulation reference signal (DMRS); or
a sounding reference signal (SRS).

11. The method according to claim 2, 3, 4, or 8, wherein the first auxiliary information comprises at least one of:
location information of the first terminal device;
distance information between the first terminal device and the network device;
orientation information of the first terminal device relative to the network device;
beam information corresponding to the first terminal device; or
location correlation between the first terminal device and a third terminal device, the third terminal device comprising a terminal device other than the first terminal device.

12. The method according to claim 2, 5, 6, or 9, wherein the second auxiliary information comprises at least one of:
location information of the second terminal device;
distance information between the second terminal device and the network device;
orientation information of the second terminal device relative to the network device;
beam information corresponding to the second terminal device; or
location correlation between the second terminal device and the first terminal device.

13. The method according to any one of claims 2 to 12, wherein determining the second CSI based on the first CSI and the auxiliary information comprises:
determining the second CSI based on channel correlation between a first channel and a second channel as well as the first CSI;
wherein the channel correlation between the first channel and the second channel is determined based on the first auxiliary information and the second auxiliary information; the first channel comprises a channel between the network device and the first terminal device; and the second channel comprises a channel between the network device and the second terminal device.

14. The method according to claim 13, wherein the channel correlation between the first channel and the second channel is determined based on location correlation between the first terminal device and the second terminal device.

15. The method according to claim 14, wherein before determining the second CSI based on the channel correlation between the first channel and the second channel as well as the first CSI, the method further comprises:
in response to that a distance between the second terminal device and the first terminal device is less than a first threshold, determining that the first terminal device and the second terminal device have the location correlation;
wherein the distance between the second terminal device and the first terminal device is determined based on the first auxiliary information and the second auxiliary information.

16. The method according to any one of claims 2 to 15, wherein determining the second CSI based on the first CSI and the auxiliary information comprises:
inputting the first CSI, the first auxiliary information, and the second auxiliary information into a first artificial intelligence (AI) model to acquire the second CSI.

17. The method according to any one of claims 1 to 16, wherein the first terminal device comprises a low-power device and/or a low-power module.

18. A channel state information acquisition method, performed by a first terminal device, and comprising:
transmitting first channel state information (CSI) to a network device; and
transmitting first auxiliary information or a first signal to the network device;
wherein the first CSI is CSI between the network device and the first terminal device, the first signal is used to determine the first auxiliary information, the first auxiliary information comprises information corresponding to the first terminal device for determining second CSI, and the second CSI is CSI between the network device and a second terminal device.

19. The method according to claim 18, wherein before transmitting the first auxiliary information to the network device, the method further comprises:
receiving a second signal from the network device, the second signal being used to determine the first auxiliary information.

20. The method according to claim 19, wherein the second signal comprises at least one of:
a synchronization signal;
a positioning reference signal (PRS);
a tracking reference signal (TRS); or
a channel state information reference signal (CSI-RS).

21. The method according to claim 18, wherein the first signal comprises at least one of:
a demodulation reference signal (DMRS); or
a sounding reference signal (SRS).

22. The method according to any one of claims 18 to 21, wherein the first auxiliary information comprises at least one of:
location information of the first terminal device;
distance information between the first terminal device and the network device;
orientation information of the first terminal device relative to the network device;
beam information corresponding to the first terminal device; or
association information between a location of the first terminal device and a location of a third terminal device, wherein the third terminal device is a terminal device other than the first terminal device within a signal range of the network device.

23. The method according to any one of claims 18 to 22, wherein the first terminal device comprises a low-power device and/or a low-power module.

24. A channel state information acquisition method, performed by a second terminal device, and comprising:
transmitting second auxiliary information or a first signal to a network device;
wherein the first signal is used to determine the second auxiliary information, the second auxiliary information comprises information corresponding to the second terminal device for determining second channel state information (CSI), and the second CSI is CSI between the network device and the second terminal device.

25. The method according to claim 24, wherein before transmitting the second auxiliary information to the network device, the method further comprises:
receiving a second signal from the network device, the second signal being used to determine the second auxiliary information.

26. The method according to claim 25, wherein the second signal comprises at least one of:
a synchronization signal;
a positioning reference signal (PRS);
a tracking reference signal (TRS); or
a channel state information reference signal (CSI-RS).

27. The method according to claim 24, wherein the first signal comprises at least one of:
a demodulation reference signal (DMRS); or
a sounding reference signal (SRS).

28. The method according to any one of claims 24 to 27, wherein the second auxiliary information comprises at least one of:
location information of the second terminal device;
distance information between the second terminal device and the network device;
orientation information of the second terminal device relative to the network device;
beam information corresponding to the second terminal device; or
association information between a location of the second terminal device and a location of a first terminal device.

29. The method according to claim 28, wherein the first terminal device comprises a low-power device and/or a low-power module.

30. A channel state information acquisition apparatus, comprising:
a processing module configured to determine second channel state information (CSI) based on first CSI and auxiliary information;
wherein the first CSI is CSI between the apparatus and a first terminal device, the second CSI is CSI between the apparatus and a second terminal device, and the auxiliary information comprises information corresponding to a terminal device for determining the second CSI.

31. A channel state information acquisition apparatus, comprising:
a transmitting module configured to transmit first channel state information (CSI) to a network device;
the transmitting module being further configured to transmit first auxiliary information or a first signal to the network device;
wherein the first CSI is CSI between the network device and the apparatus, the first signal is used to determine the first auxiliary information, the first auxiliary information comprises information corresponding to the apparatus for determining second CSI, and the second CSI is CSI between the network device and a second terminal device.

32. A channel state information acquisition apparatus, comprising:
a transmitting module configured to transmit second auxiliary information or a first signal to a network device;
wherein the first signal is used to determine the second auxiliary information, the second auxiliary information comprises information corresponding to the apparatus for determining second channel state information (CSI), and the second CSI is CSI between the network device and the apparatus.

33. A communication device, comprising:
a processor;
a receiver and/or a transmitter connected to the processor; and
a memory configured to store an instruction executable by the processor;
wherein the communication device is configured to implement the channel state information acquisition method according to any one of claims 1 to 17, or any one of claims 18 to 23, or any one of claims 24 to 29.

34. A computer-readable storage medium, having stored thereon executable instructions, wherein the executable instructions are loaded and executed by a processor to implement the channel state information acquisition method according to any one of claims 1 to 17, or any one of claims 18 to 23, or any one of claims 24 to 29.

35. A chip, comprising a programmable logic circuit or a program, wherein the chip is configured to implement the channel state information acquisition method according to any one of claims 1 to 17, or any one of claims 18 to 23, or any one of claims 24 to 29.

36. A computer program product, comprising computer instructions, wherein the computer instructions are stored in a computer-readable storage medium, a processor of a computer device reads the computer instructions from the computer-readable storage medium, and the processor executes the computer instructions to cause the computer device to perform the channel state information acquisition method according to any one of claims 1 to 17, or any one of claims 18 to 23, or any one of claims 24 to 29.

37. A computer program, comprising computer instructions, wherein a processor of a computer device executes the computer instructions to cause the computer device to perform the channel state information acquisition method according to any one of claims 1 to 17, or any one of claims 18 to 23, or any one of claims 24 to 29.
